# EUROPÄISCHE PATENTSCHRIFT

(11) **EP 2 180 995 B1**
(45) Veröffentlichungstag und Bekanntmachung des Hinweises auf die Patenterteilung: **25.12.2019**
(21) Anmeldenummer: 08801452.7
(22) Anmeldetag: 06.06.2008
(51) Int. Cl.: B32B 7/12, B32B 27/08, A47B 96/20, B29C 63/00, B29C 65/02, B29C 65/14, B29C 65/16, B29C 65/34, B29C 65/48, B29C 65/50

(54) **KANTENLEISTE FÜR MÖBELSTÜCKE**
EDGE TRIM FOR PIECES OF FURNITURE
BAGUETTE D'ANGLE POUR MEUBLES

(30) Priorität: 24.08.2007 DE 202007011911 U
(43) Veröffentlichungstag der Anmeldung: 05.05.2010
(60) Teilanmeldung: 11003102.8
(73) Patentinhaber: Rehau AG + Co, 95111 Rehau (DE); bulthaup GmbH & Co KG, 84153 Aich (Bodenkirchen) (DE)
(72) Erfinder: KRÄMER, Uwe, 95111 Rehau (DE); GLASER, Peter, 95111 Rehau (DE)
(74) Vertreter: Grünecker Patent- und Rechtsanwälte PartG mbB
(86) Internationale Anmeldenummer: PCT/EP2008/004520
(87) Internationale Veröffentlichungsnummer: WO 2009/026977

(56) Entgegenhaltungen:
- EP-A- 1 080 854
- EP-A- 1 163 864
- WO-A-2006/050899
- DE-A1- 2 123 182
- DE-A1- 3 445 450
- DE-A1- 3 829 675
- DE-C1- 4 215 755

## Beschreibung

Die Erfindung betrifft eine Kantenleiste für Möbetstücke, umfassend eine Schmelzschicht und eine mit der Schmelzschicht verbundene Strukturschicht.

Aus der EP 1 163 884 ist eine Möbelplatte und ein Verfahren zu deren Herstellung bekannt. Dort wird eine gattungsgemäße Kantenleiste beschrieben, bei der die Schmelzschicht mit Holzwerkstoffen über Lasertechnik verschweißt werden kann.

Zur Fixierung der Kantenleiste am Möbelstück ist es bei einigen Werkstoffen schwierig. einen sicheren Halt am Möbelstück zu bewerkstelligen.

Der Erfindung liegt die Aufgabe zugrunde, eine Kantenleiste für Möbelstücke bereitzusteilen, die unabhängig vom Werkstoff eines Möbelstücks, an wenigstens einer Kante des Möbetstücks optisch ohne Trennfuge und klebstofffrei fixierbar ist

Um diese Aufgabe zu lösen, stellt die Erfindung eine Kantenleiste für Möbelstücke nach Anspruch 1 bereit Weil die Schmelzschicht sowohl polare als auch unpolare Anteile Im Molekülaufbau enthält, kann die Kantenleiste durch die Zufuhr von Energie durch beispielsweise Licht und/oder Strahlung mit Möbelstücken aus unterschiedlichsten Werkstoffen verbunden werden. Dadurch ist die Schmelzschicht durch Aufschmeizen stoffschlüssig an polaren und unpolaren Werkstoffen unmittelbar anbindbar.

Eine mechanische Adhäsion wird beispielsweise erreicht, in dem die Schmetzschicht in eine Zellstruktur des Möbelstücks eindringt, diese umklammert und aushärtet Eine spezifische Adhäsion wird durch verschiedene Effekte erreicht: Die Schmelzschicht mit polaren als auch unpolaren Anteilen im Molekülaufbau zeigt eine gute Affinität zu Werkstoffen wie Holz, um ein Eindiffundieren zu erleichtern. Beispielsweise zeigen die in Holzwerkstoffen enthaltenen Cellulosen, die OH-Gruppen enthalten, sehr starken Dipolcharakter und damit Adhäsion zu polaren Stoffen.

Bevorzugte Ausführungen der erfindungsgemäßen Kantenleiste werden in den Unteran-Erfindungsgemäß weist die Kantenleiste eine mit der Schmelzschicht verbundene Strukturschicht auf. Diese Maßnahme hat den Vorteil, dass die Strukturschicht der Kantenleiste ungeachtet der Funktion der Schmelzschicht die eigentliche Struktur verleiht, wobei die Schmelzschicht und die Strukturschicht jeweils funktional ausgelegt werden können.

Es kann von Vorteil sein, wenn die Schmelzschicht polare und/oder reaktive Molekülgruppen aufweist, so dass adhesive und/oder kovalente und/oder ionische Anbindungen erreichbar sind. Die besten Ergebnisse bei der Anbindung der erfindungsgemäßen Kantenleiste werden erzielt, wenn das Polymer der Schmelzschicht eine sehr gute Fließfähigkeit aufweist

Derartige polare und/oder reaktive Gruppen können, z.B. durch entsprechende Copolymerisation und/oder Pfropfung und/oder nachträglicher Oberflächenbehandlung (Beflammen, Coroma- oder Plasmaverfahren) einfach In den Molekülaufbau der Schmelzschicht eingebaut sein. Die reaktiven Gruppen können zusätzlich chemische Bindungen zwischen der Schmetzschicht und dem jeweiligen Verbindungspartner im Möbelstück bilden und dadurch für eine besonders hohe Verbindungsfestigkeit sorgen.

Es kann sich als hilfreich erweisen, wenn die Schmelzschicht Molekülgruppen basierend auf Carbonsäuren bzw. deren Ester bzw. Salze insbesondere Acrylsäure. Acrylsäureester, Metacrylsäure, Metacrylsäureester, Methylmetacrylsäureester; Epoxide, Isocyanaten, Phenol-Formaldehydharz, Silanen, Titanaten, Alkoholen. Amiden, Imiden, Ammoniumverbindungen oder Sulfonsäuren bzw. deren Estern oder Salzen oder dgl. aufweist. Vorzugsweise umfasst die Schmelzschicht eine oder mehrere der Molekülgruppen ausgewählt aus diesen Gruppen oder Mischungen daraus.

Es liegt jedoch auch im Rahmen der Erfindung, sogenannte geblockte Isocyanate und dgl. einzusetzen, die erst bei definierten Aktivierungstemperaturen ihre Reaktivität erreichen.

Eine weitere bevorzugte Ausführung der Erfindung betrifft eine Kantenleiste nach einer der vorangegangenen Ausführungen, wobei die Strukturschicht aus einem thermoplastischen Polymer, bevorzugt Polypropylen, Acryinitril-Butadien-Styrol-Copolymerisat, Polyvinylchlorid, Polymethylmethacrylat, Polyethylenterephthalat, Polyethylen, Styrol-Ethylen-Butadlen-Styrol-Blockcopolymer und Polyamid und dgl. gefertigt ist. Diese Maßnahme hat den Vorteil, dass dieser Werkstoff kostengünstig verfügbar und gut verarbeitbar Ist.

Eine weitere bevorzugte Ausführung der Erfindung betrifft eine Kantenleiste nach einer der vorangegangenen Ausführungen, wobei die Schmelzschicht auf einem thermoplastische Polymer, bevorzugt Polypropylen, Acrylnitril-Butadien-Styrol-Copolymerisat, Polyvinylchlorid, Polymethylmethacrylat, Polyethylenterephthalat, Polyethylen, Styrol-Ethylen-Butadien-Styrol-Blockcopolymer und Polyamid und dgl. basiert. Diese Maßnahme hat den Vorteil, dass dieser Werkstoff kostengünstig verfügbar sowie gut verarbeitbar ist, und zudem einfach chemisch modifizierbar ist.

In einer weiter bevorzugten Ausführungsform ist die Schmelzschicht als thermoplastische Funktionsschicht ausgebildet, die es erstmals ermöglicht, eine Kantenleiste nach den vorher beschriebenen Ausführungsformen klebstofffrei und ohne eine sichtbare Fuge an einer Schmalseite eines Möbelstückes zu fixieren.

Eine weitere bevorzugte Ausführung der Erfindung betrifft eine Kantenleiste nach einer der vorangegangenen Ausführungen, wobei die Schmelzschicht auf dem Werkstoff basiert, aus welchem die Strukturschicht gefertigt ist. Diese Maßnahme hat den Vorteil, dass zwischen den Schichten der Kantenleiste ein besonders fester Verbund entsteht.

Eine weitere bevorzugte Ausführung der Erfindung betrifft eine Profilleiste nach einer der vorgenannten Ausführungen, wobei die Schmelzschicht aus einem Blend, das aus mindestens einem der vorgenannten thermoplastischen Polymere, mindestens aus einem weiteren Polymer, das die vorgenannten polaren und/oder reaktiven Molekülgruppen aufweist und Additiven besteht.

Eine weitere bevorzugte Ausführung der Erfindung betrifft eine Kantenleiste nach einer der vorangegangenen Ausführungen, wobei die Strukturschicht und die Schmelzschicht stoffschlüssig verbunden sind. Diese Maßnahme hat den Vorteil, dass die Schichten der Kantenleiste besonders fest verbunden sind.

Eine weitere bevorzugte Ausführung der Erfindung betrifft eine Kantenleiste nach einer der vorangegangenen Ausführungen, wobei die Strukturschicht und die Schmelzschicht koextrudiert sind. Diese Maßnahme hat den Vorteil, dass sich die Formgebung der Kantenleiste besonders einfach gestaltet.

Eine weitere bevorzugte Ausführung der Erfindung betrifft eine Kantenleiste nach einer der vorangegangenen Ausführungen, wobei der Werkstoff der Schmelzschicht einen niedrigeren Schmelzpunkt aufweist als der Werkstoff der Strukturschicht. Diese Maßnahme hat den Vorteil, dass bei einer Erwärmung der Kantenleiste auf eine Temperatur über dem Schmelzpunkt der Schmelzschicht, aber unter dem Schmelzpunkt der Strukturschicht, tediglich die Schmelzschicht (an)schmilzt und einen zähflüssigen bzw. zähplastischen Zustand erreicht, wahrend die Strukturschicht ihren festen Zustand unverändert beibehält.

Eine weitere bevorzugte Ausführung der Erfindung betrifft eine Kantenleiste nach einer der vorangegangenen Ausführungen, wobei der Werkstoff der Schmetzschicht ein Copotymer, vorzugsweise ein Propfcopolymer, bevorzugt Maleinsäureanhydrid-gepfropftes Polypropyten ist Diese Maßnahme hat den Vorteil, dass sich die Werkstoffzusammensetzung, insbesondere der Anteil polarer Gruppen im Molekülaufbau, und damit die Werkstoffeigenschaften dezielt einstellen lassen.

Erfindungsgemäß enthält die Schmelzschicht Energie absorbierende Zusatzstoffe. Die Energie absorbierenden Zusatzstoffe sind vorzugsweise Licht und/oder Strahlung absorbierende Zusatzstoffe, bspw. Laserpigmente.

Diese Maßnahme hat den Vorteil, dass die Schmelzschicht gezielt mit Energie beaufschlagbar und Ober den Schmelzpunkt erwärmbar ist Vorzugsweise sind die Energie absorbierenden Zusatzstoffe in bestimmten Schmelzabschnitten in der Schmetzschicht enthalten, die gezielt aufgeschmolzen werden, wobei die Schmelzabschnitte in beliebigen Mustern angeordnet sein können, z.B. als parallele Linien entlang der längsrandseitigen Kanten der Kantenleiste.

Eine weitere bevorzugte Ausführung der Erfindung betrifft eine Kantenleiste nach einer der vorangegangenen Ausführungen, wobei die Strukturschicht die Oberschicht der Kantenleiste bildet, die eine Oberseite bzw. Sichtseite der Kantenleiste definiert. Diese Maßnahme hat den Vorteil, dass das Erscheinungsbild der Kantenleiste auch nach dem Aufschmelzen und Verschweißen der Schmelzschicht an einem Möbelstück, z.B. einer Holzwerkstoffplatte (Spanplatte, MDF-Platte) an der Sichtseite unverändert erhalten bleibt

Eine weitere bevorzugte Ausführung der Erfindung betrifft eine Kantenleiste nach einer der vorangegangenen Ausführungen, wobei die Oberseite der Kantenleiste ein Dekor aufweist. Diese Maßnahme hat den Vorteil, dass die Kantenleiste trotz eines im Wesentlichen identischen strukturellen Aufbaus unterschiedliche Dekorierungen aufweisen kann, z.B. eine auf eine Ablagefläche des Möbelstücks abgestimmte Dekorierung.

Eine weitere bevorzugte Ausführung der Erfindung betrifft eine Kantenleiste nach einer der vorangegangenen Ausführungen, wobei die Schmelzschicht die Unterschicht der Kantenleiste bildet, die eine Unterseite bzw. Anlageseite der Kantenseite definiert. Diese Maßnahme hat den Vorteil, dass die Schmelzschicht unmittelbar mit einer zu verdeckenden Stirnseite eines Möbelstücks, z.B. einer Holzwerkstoffplatte (Spanplatte, MDF-Platte), verschweißbar ist.

In einer weiteren vorteilhaften Ausgestaltung der Erfindung weist die Schmelzschicht Zusatzstoffe auf, wie bspw. Farbstoffe, Pigmente und dgl., die zu einer vorteilhaften farblichen Übereinstimmung zwischen der Schmelzschicht und der Deckschicht, aber auch zur Oberseite des Möbelstücks führen. Die aus dem Stand der Technik bekannte, optisch sichtbare, Trennfuge zwischen der Kante des Möbelstücks und der Deckschicht wird somit vermieden.

Eine weitere bevorzugte Ausführung der Erfindung betrifft eine Kantenleiste nach einer der vorangegangenen Ausführungen, wobei die Strukturschicht eine Dicke von 0,8 bis 1,6 mm, vorzugsweise 1,0 bis 5,0 mm aufweist. Diese Maßnahme hat den Vorteil, dass die Strukturschicht der Kantenleiste eine ausreichend steife Struktur verleiht.

Eine weitere bevorzugte Ausführung der Erfindung betrifft eine Kantenleiste nach einer der vorangegangenen Ausführungen, wobei die Schmelzschicht eine Dicke von 0,1 bis 0,5 mm, vorzugsweise 0,2 bis 0,5 mm aufweist. Diese Maßnahme hat den Vorteil, dass die Schmelzschicht nur in einer erforderlichen Dicke ausgeführt ist, um die Anbindung an das Möbelstück zu bewerkstelligen. Dadurch wird der im Verhältnis zum Werkstoff der Strukturschicht teurere Werkstoff der Schmelzschicht eingespart.

Eine weitere bevorzugte Ausführung der Erfindung betrifft ein Möbelstück mit einer Kantenleiste nach einer der vorangegangenen Ausführungen, wobei die Schmelzschicht zumindest abschnittsweise mit einer Kante des Möbelstücks stoffschlüssig und/oder chemisch verbunden ist. Diese Maßnahme hat den Vorteil, dass die Schmelzschicht stoffschlüssig und/oder chemisch und ggf. auch formschlüssig mit dem Möbelstück verbunden ist. Durch die partielle Verschweißung, wonach die Schmelzschicht nur abschnittsweise mit der Kante des Möbelstücks verschweißt wird, die Kante aber vollständig durch die Kantenleiste verkleidet wird, ist die Schmelzschicht nur an ausgewählten Stellen mit Energie zu beaufschlagen, so dass Zeit und Energie eingespart werden. Die Bezeichnung "chemisch verbunden" bezeichnet eine chemische Bindung aufgrund einer chemischen Reaktion zwischen einer in der Schmelzschicht enthaltenen, reaktiven Molekülgruppe und einem entsprechenden Verbindungspartner bzw. der Kante des Möbelstücks. Die in der Schmelzschicht enthaltene, reaktive Molekülgruppe und der Verbindungspartner sind dabei nicht eingeschränkt, solange sie in der Lage sind, eine chemische Bildung miteinander eingehen zu können. Die chemische Bindung zwischen der Molekülgruppe in der Schmelzschicht und dem jeweiligen Verbindungspartner im Möbelstück sorgt für eine besonders hohe Verbindungsfestigkeit.

Eine weitere bevorzugte Ausführung der Erfindung betrifft ein Möbelstück nach der vorangegangenen Ausführung, wobei die Unterseite der Kantenleiste vollflächig mit der Kante des Möbelstücks stoffschlüssig und/oder chemisch verbunden ist. Diese Maßnahme hat den Vorteil, dass die Schmelzschicht sicher und dauerfest mit dem Möbelstück verbunden ist.

Eine weitere bevorzugte Ausführung der Erfindung betrifft ein Möbelstück nach einer der vorangegangenen Ausführungen, wobei der Werkstoff des Möbelstücks ausgewählt ist aus der Gruppe der Holzwerkstoffe, der Holzersatzwerkstoffe, der Metalle, der Gläser, der Kunststoffe, der Steine, der Keramiken oder Kombinationen davon. Diese Maßnahme hat den Vorteil, dass hinsichtlich der Werkstoffauswahl des Möbelstücks größtmögliche Freiheiten bestehen. Holz enthält beispielsweise ca. 40 % Cellulose, ca. 25 % Holocellulose und ca. 30 % Lignin. Die Cellulose ist ein lineares Kettenmolekül (bis zu 8 µm lang) und ist insbesondere für die Zugfestigkeit des Holzes verantwortlich. Die Holocellulosen sind aus unterschiedlichen Zuckern aufgebaut, die Ketten sind wesentlich kürzer und weisen Seitengruppen und Verzweigungen auf. Die Holocellulosen sind durch kovalente Bindungen mit dem Lignin in der Zellwand verbunden. Insbesondere die Cellulosen weisen eine Vielzahl von OH-Gruppen auf, die für den inneren Zusammenhalt des Holzes erforderlich sind, aber auch für die äußere Anbindung der Schmelzschicht nutzbar sind. Diese OH-Gruppen sind besonders geeignet, eine chemische Bindung mit in der Schmelzschicht enthaltenen, reaktiven Molekülgruppen bilden.

Grundsätzlich sind alle Werkstoffe, die entsprechende reaktive Gruppen an der Oberfläche haben, die mit den Kanten von bspw. Möbelstücken in Berührung kommen, für chemische Bindungen geeignet. Gegebenenfalls können die Werkstoffe zunächst oberflächenmodifiziert werden, falls eine chemische Bindung zwischen Kanteleiste und Möbelwerkstoff gewünscht ist und die Werkstoffe per se keine oder nicht ausreichend chemisch reaktive Verbindungspartner aufweisen.

Eine weitere bevorzugte Ausführung der Erfindung betrifft ein Möbelstück nach einer der vorangegangenen Ausführungen, wobei der Werkstoff der Strukturschicht ausgewählt ist aus der Gruppe der Holzwerkstoffe, der Holzersatzwerkstoffe, der Metalle, der Gläser, der Kunststoffe, der Steine, der Keramiken oder Kombinationen davon. Diese Maßnahme hat den Vorteil, dass hinsichtlich der Werkstoffauswahl der Strukturschicht größtmögliche Freiheiten bestehen.

### Kurze Beschreibung der Figuren:

- Figur 1: zeigt eine schematische Schnittansicht einer Möbelstückkante und einer daran anzubindenden erfindungsgemäßen Kantenleiste.
- Figur 2: zeigt eine schematische Schnittansicht einer Möbelstückkante und der daran angebundenen erfindungsgemäßen Kantenleiste.
- Figur 3: zeigt eine schematische und perspektivische Ansicht einer Möbelstückkante mit einer teilweise angebundenen, erfindungsgemäßen Kantenleiste, zur Erläuterung eines Verfahrens zum Anbringen der Kantenleiste an der Möbelstückkante.

### Detaillierte Beschreibung der bevorzugten Ausführungsbeispiele

Die erfindungsgemäße Kantenleiste 1 wird nachstehend mit Bezug auf die beiliegenden Figuren beschrieben.

Die erfindungsgemäße Kantenleiste 1 für Möbelstücke 4 umfasst eine Schmelzschicht 3 die sowohl polare als auch unpolare Anteile im Molekülaufbau enthält. Dazu ist die Schmelzschicht 3 aus einem Werkstoff gefertigt, der chemisch modifiziert ist, so dass er sowohl polare als auch unpolare Anteile im Molekülaufbau enthält. Dadurch ist die Schmelzschicht 3 durch Aufschmelzen stoffschlüssig an polaren oder unpolaren Werkstoffen unmittelbar anbindbar. In der einfachsten Variante umfasst die Kantenleiste 1 ausschließlich die Schmelzschicht 3, d.h. die Kantenleiste 1 ist aus dem chemisch modifizierten Werkstoff gefertigt, der sowohl polare als auch unpolare Anteile im Molekülaufbau enthält.

Die bevorzugte Kantenleiste 1 für Möbelstücke 4 umfasst eine Strukturschicht 2 und die Schmelzschicht 3 aus dem chemisch modifizierten Werkstoff, der sowohl polare als auch unpolare Anteile im Molekülaufbau enthält. Zwischen der Strukturschicht 2 und der Schmelzschicht 3 können keine, eine oder mehrere Zwischenschichten vorgesehen sein, so dass die Strukturschicht 2 und die Schmelzschicht 3 zumindest mittelbar, vorzugsweise unmittelbar verbunden sind. Die Strukturschicht 2 kann weggelassen werden, wenn die Schmelzschicht 3 eine ausreichende Dicke aufweist, um der Kantenleiste 1 die notwendige Steifigkeit zu verleihen. Da der chemisch modifizierte Werkstoff der Schmelzschicht 3 i.d.R. teurer als der Werkstoff der Strukturschicht 2 ist, wird die Variante mit Strukturschicht 2 bevorzugt.

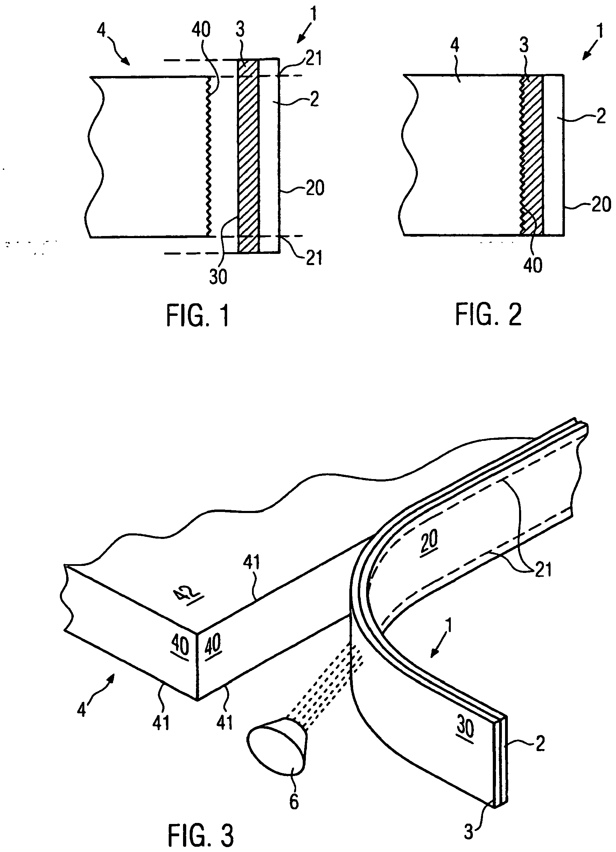

Figur 1 zeigt eine schematische Schnittansicht einer Möbelstückkante 4 und einer daran anzubindenden erfindungsgemäßen Kantenleiste 1.

Als Strukturschicht 2 wird im Sinne der Erfindung eine Schicht bezeichnet, die der Kanteinleiste 1 im Wesentlichen ihre Struktur verleiht. Ein Werkstoff der Strukturschicht 2 kann ausgewählt sein aus beliebigen Werkstoffen, z.B. der Gruppe der Holzwerkstoffe, der Holzersatzwerkstoffe, der Metalle, der Gläser, der Kunststoffe, der Steine, der Keramiken oder Kombinationen davon.

In einem bevorzugten Ausführungsbeispiel ist die Strukturschicht 2 aus einem thermoplastischen Polymer, bevorzugt Polypropylen, Acrylnitril-Butadien-Styrol-Copolymerisat, Polyvinylchlorid, Polymethylmethacrylat, Polyethylenterephthalat und dgl. gefertigt.

Die Strukturschicht 2 bildet in den dargestellten Ausführungsbeispielen gleichzeitig die Oberschicht 2 der Kantenleiste 1, die eine Oberseite bzw. Sichtseite 20 der Kantenleiste 1 definiert. Alternativ sind über der Strukturschicht 2 eine oder mehrere Schichten angeordnet, beispielsweise eine Dekorschicht bzw. Dekorfolie mit einer dekorierten Oberfläche. Die Strukturschicht 2 weist eine Dicke von 0,8 mm bis 5,0 mm, vorzugsweise 1,0 bis 3,0 mm auf.

Als Schmelzschicht 3 wird ihm Rahmen dieser Beschreibung eine Schicht bezeichnet, die aus einem schmelzfähigen Werkstoff besteht, der vorzugsweise bei Temperaturerhöhung auf über den Schmelzpunkt erweicht und einen zähflüssigen bzw. zähplastischen Zustand einnimmt, und bei Abkühlung wieder erstarrt.

Der Werkstoff der Schmelzschicht 3 ist derart chemisch modifiziert, dass er polare und/oder unpolare und/oder reaktive Molekülgruppen enthält. Demnach wird der Werkstoff der Schmelzschicht 3 auch als Phasenvermittler bezeichnet. Durch Aufschmelzen ist der Werkstoff der Schmelzschicht 3 stoffschlüssig an polaren und unpolaren Werkstoffen unmittelbar anbindbar. Die Schmelzschicht 3 basiert vorzugsweise auf dem gleichen Werkstoff wie die Strukturschicht 2, d. h. auf einem unpolaren Werkstoff, vorzugsweise Kunststoff, bevorzugt Polypropylen, Acrylnitril-Butadien-Styrol-Copolymerisat, Polyvinylchlorid, Polymethylmethacrylat, Polyethylenterephthalat und dgl., ist aber chemisch modifiziert. Insbesondere ist der Werkstoff der Schmelzschicht 3 ein Copolymer, vorzugsweise ein Propfcopolymer, bevorzugt ein mit Maleinsäureanhydrid-gepfropftes Polypropylen. Der Werkstoff der Schmelzschicht 3 enthält einen Anteil von bis zu vier Prozent polare und/oder reaktive Gruppen im Molekülaufbau, bevorzugt zwischen 0,5 und 2%, vorzugsweise 1%. Die Schmelzschicht 3 weist eine Dicke von 0,1 mm bis 1,5 mm, vorzugsweise 0,2 mm bis 0,5 mm auf. Bevorzugt enthält die Schmelzschicht eine oder mehrere der Molekülgruppen basierend auf Carbonsäuren bzw. deren Ester bzw. Salze insbesondere Acrylsäure, Acrylsäureester, Metacrylsäure, Metacrylsäureester, Methylmetacrylsäureester; Epoxide, Isocyanaten, Phenol-Formaldehydharz, Silanen, Titanaten, Alkoholen, Amiden, Imiden, Ammoniumverbindungen oder Sulfonsäuren bzw. deren Estern oder Salzen oder dgl. aufweist.

Die Strukturschicht 2 und die Schmelzschicht 3 sind vorzugsweise stoffschlüssig verbunden, bevorzugt koextrudiert. Der Werkstoff der Schmelzschicht 3 weist vorzugsweise einen niedrigeren Schmelzpunkt auf, als der Werkstoff der Strukturschicht 2. Wird die Kantenleiste 1 auf eine vorgegebene Temperatur erhitzt, die über dem Schmelzpunkt des Werkstoffs der Schmelzschicht 3 aber unter dem Schmelzpunkt der Strukturschicht 2 liegt, so wird nur der Werkstoff der Schmelzschicht 3 erweicht bzw. aufgeschmolzen, was wünschenswert ist.

Figur 3 zeigt eine schematische und perspektivische Ansicht eines Möbelstücks 4 mit der erfindungsgemäßen Kantenleiste 1, wobei die Schmelzschicht 3 der Kantenleiste 1 stoffschlüssig mit einer Kante 40 des Möbelstücks 4 unmittelbar verbunden ist, bzw. verbunden wird.

Das Möbelstück 4 umfasst eine Platte (z.B. Tischplatte, Küchenarbeitsplatte, etc.) aus einem Werkstoff, der ausgewählt ist aus beliebigen Werkstoffen, z.B. der Gruppe der Holzwerkstoffe, der Holzersatzwerkstoffe, der Metalle, der Gläser, der Kunststoffe, der Steine, der Keramiken oder Kombinationen davon.

Im vorliegenden Beispiel ist das Möbelstück 4 eine Platte aus einem Holzwerkstoff, insbesondere eine Spanplatte oder eine MDF-Platte. Das Möbelstück 4 umfasst Kanten 40, die von Kantenrändern 41 definiert und umrandet sind, eine Oberseite bzw. Ablageseite 42 und eine Unterseite (nicht dargestellt).

Die Kantenleiste 1 umfasst im Ausführungsbeispiel gemäß Fig. 3 den bevorzugten Aufbau mit einer die Sichtseite 20 definierenden Strukturschicht 2 und einer die Anlageseite 30 definierenden Schmelzschicht 3, und weist eine flexible Struktur auf.

Der Werkstoff der Strukturschicht 2 ist Polypropylen. Der Werkstoff der Schmelzschicht 3 ist Maleinsäureanhydrid-gepfropftes Polypropylen. Die Kantenleiste 1 wird in einem im Wesentlichen herkömmlichen Verfahren an die zu verkleidende Kante 40 des Möbelstücks 4 angefahren, wobei die Anlageseite 30 der Schmelzschicht 3 unmittelbar vor dem Anfahren der Kantenleiste 1 an die Kante 40 durch ein Energiebeaufschlagungsmittel 6 mit Energie beaufschlagt wird. Durch Beaufschlagung mit Energie wird die Schmelzschicht 3 erwärmt.

Die Energie wird in beliebiger Form, vorzugsweise in Form von Laserlicht, Heißluft, Mikrowellen, Ultraschall etc. zugeführt, wobei ein vorzugsweise in der Schmelzschicht 3 enthaltenes Energieabsorptionsmittel (z.B. Laserpigmente) die durch das Energiebeaufschlagungsmittel 6 zugeführte Energie aufnimmt und die Schmelzschicht 3 über den Schmelzpunkt erwärmt. Dabei ist nicht erforderlich, dass die Schmelzschicht 3 vollständig aufgeschmolzen wird, sondern dass die Schmelzschicht 3 lediglich an der Anlageseite 30 aufgeweicht wird, so dass die Schmelzschicht 3 zumindest abschnittsweise einen zähflüssigen bzw. zähplastischen Zustand einnimmt und beim Andrücken der Kantenleiste 1 an die Kante 40 des Möbelstücks 4 mechanisch in die vorzugsweise raue Oberflächenstruktur der Kante 40 des Möbelstücks 4 eingreift. Durch die eingestellten chemischen Eigenschaften der Kantenleiste 1, wird die Schmelzschicht 3 zusätzlich stoffschlüssig mit der Kante 40 des Werkstücks 4 verbunden.

Einer Schmelzschicht 3, die reaktive Molekülgruppen aufweist, wird durch das Energiebeaufschlagungsmittel 6 vorzugsweise soviel Energie zugeführt, dass eine Aktivierungsenergie überschritten wird, um eine chemische Reaktion auszulösen und eine chemische Bindung zwischen der Schmelzschicht 3 und dem jeweiligen Verbindungspartner, hier dem Möbelstück 4, zu bewerkstelligen. Das Beaufschlagen der Schmelzschicht 3 mit Energie, um eine chemische Reaktion zwischen der Schmelzschicht 3 und der Kante 40 des Möbelstücks 4 herbeizuführen, um die Schmelzschicht 3 und die Kante 40 des Möbelstücks 4 chemisch zu verbinden, erfolgt wahlweise gleichzeitig oder unabhängig von dem Beaufschlagen der Schmelzschicht 3 mit Energie zum Aufschmelzen der Schmelzschicht 3.

Die Aktivierungsenergie, um eine chemische Bindung zwischen der Schmelzschicht 3 und dem jeweiligen Verbindungspartner, hier dem Möbelstück 4, zu bewerkstelligen, wird unter anderem durch folgende Parameter beeinflusst:
- Temperatur
- Strahlung (Laser, UV-Licht)
- Anpresskraft
- Fügespalt
- Schichtdicke
- Aushärtezeit
- Umgebungsluft (Feuchtigkeit, Sauerstoffgehalt)
- Substratoberfläche
- Vorbehandlung

Bei einer Schmelzschicht 3 aus Maleinsäureanhydrid-gepfropftem Polypropylen (PP-MAH) wird die Schmelzschicht 3 beispielsweise auf eine Temperatur von größer + 135°C erwärmt. Diese Temperatur ist in der Regel ausreichend hoch, so dass das Maleinsäureanhydrid (MAH) mit den OH-Gruppen des Holzes reagiert, um eine chemische Bindung zu bewerkstelligen.

Die Kantenleiste 1 wird i.d.R. mit Übermaß gefertigt und derart an die Kante 40 des Möbelstücks 4 angefahren, dass beidseitig der Kantenleiste 1 ein Überstandsbereich zwischen den gestrichelten Linien 21 und den Rändern der Kantenleiste 1 im angebundenen Zustand entsteht. Dieser Materialüberstand wird im Wege einer spanabhebenden Bearbeitung abgearbeitet, so dass die längsrandseitigen Kanten der Kantenleiste 1 und die Ablagefläche 42 sowie die Unterseite (nicht dargestellt) des Möbelstücks 4 bündig verlaufen.

Es reicht aus, wenn die Anlageseite 30 der Kantenleiste 1 zumindest abschnittsweise stoffschlüssig und/oder chemisch mit der Kante 40 des Möbelstücks 4 verbunden bzw. verschweißt ist. Dabei sind punktförmige, strichförmige oder schachbrettartige Schweißmuster möglich, die beispielsweise durch gezielte Beaufschlagung der Schmelzschicht 3 mit Energie absorbierenden Zusatzstoffen bewerkstelligt werden können. Es ist jedoch bevorzugt, dass die Schmelzschicht 3 vollflächig mit der Kante 40 des Möbelstücks 4 verbunden, bzw. verschweißt wird. Dies gilt insbesondere für die Eckbereiche des Möbelstücks 4, wo die Kantenleisten 1 z.B. über Eck benachbart angeordnet werden, um ein Ablösen der Kantenleisten 1 ausgehend von den Eckbereichen des Möbelstücks 4 zu verhindern.

Figur 2 zeigt den verbundenen Zustand der erfindungsgemäßen Kantenleiste 1 und des Möbelstücks 4. Dabei ist dargestellt, wie der zunächst aufgeschmolzene und nachträglich erstarre Werkstoff der Schmelzschicht 3 in die raue bzw. poröse bzw. mikroporöse Oberflächenstruktur an der Kante 40 des Möbelstücks 4 eingreift, so dass die Schmelzschicht 3 stoffschlüssig und - wenn es die Oberflächenstruktur des Möbelstücks 4 zulässt - auch formschlüssig mit dem Möbelstück 4 verbunden ist.

Besonders bevorzugte Varianten der erfindungsgemäßen Kantenleiste 1 sind nachfolgend unter Angabe der jeweiligen Werkstoffe angeführt:

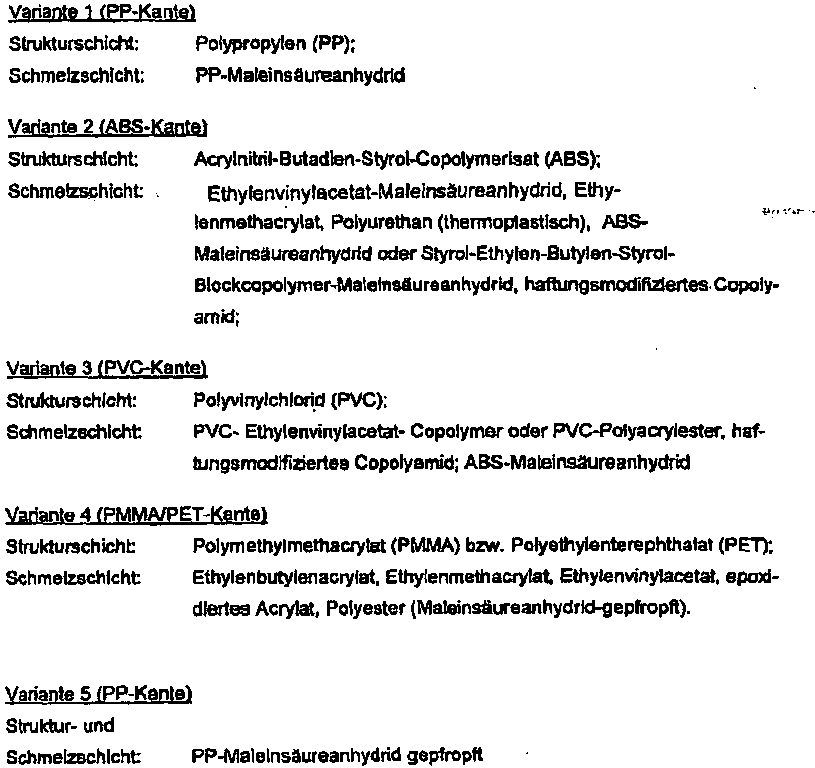

## Patentansprüche

1. Kantenleiste (1) für Möbelstücke, umfassend eine Schmelzschicht (3) und eine mit der Schmelzschicht (3) verbundene Strukturschicht (2), **dadurch gekennzeichnet, dass** die Schmelzschicht (3) sowohl polare als auch unpolare Anteile im Molekülaufbau enthält, und dass die Schmelzschicht (3) Energie absorbierende Zusatzstoffe enthält.

2. Kantenleiste (1) nach Anspruch 1, wobei die Strukturschicht (2) aus einem thermoplastischen Polymer, bevorzugt Polypropylen, Acrylnitril-Butadien-Styrol-Copolymerisat, Polyvinylchlorid, Polymethylmethacrylat, Polyethylenterephthalat gefertigt ist.

3. Kantenleiste (1) nach einem der vorangegangenen Ansprüche, wobei die Schmelzschicht (3) auf einem thermoplastischen Polymer, bevorzugt Polypropylen, Acrylnitril-Butadien-Styrol-Copolymerisat, Polyvinylchlorid, Polymethylmethacrylat, Polyethylenterephthalat basiert.

4. Kantenleiste (1) nach einem der vorangegangenen Ansprüche, wobei die Schmelzschicht (3) auf dem Werkstoff basiert, aus welchem die Strukturschicht (2) gefertigt ist.

5. Kantenleiste (1) nach einem der vorangegangenen Ansprüche, wobei die Strukturschicht (2) und die Schmelzschicht (3) stoffschlüssig verbunden sind.

6. Kantenleiste (1) nach einem der vorangegangenen Ansprüche, wobei die Strukturschicht (2) und die Schmelzschicht (3) koextrudiert sind.

7. Kantenleiste (1) nach einem der vorangegangenen Ansprüche, wobei der Werkstoff der Schmelzschicht (3) einen niedrigeren Schmelzpunkt aufweist als der Werkstoff der Strukturschicht (2).

8. Kantenleiste (1) nach einem der vorangegangenen Ansprüche, wobei der Werkstoff der Schmelzschicht (3) ein Copolymer, vorzugsweise ein Pfropfcopolymer, bevorzugt Maleinsäureanhydrid-gepfropftes Polypropylen ist.

9. Kantenleiste (1) nach einem der vorangegangenen Ansprüche, wobei die Schmelzschicht (3) Licht und/oder Strahlung absorbierende Zusatzstoffe, bevorzugt Laserpigmente enthält.

10. Kantenleiste (1) nach einem der vorangegangenen Ansprüche, wobei die Strukturschicht (2) die Oberschicht der Kantenleiste (1) bildet, die eine Oberseite bzw. Sichtseite (20) der Kantenleiste (1) definiert.

11. Kantenleiste (1) nach einem der vorangegangenen Ansprüche, wobei die Schmelzschicht (3) die Unterschicht der Kantenleiste (1) bildet, die eine Unterseite bzw. Anlageseite (30) der **Kantenleiste** (1) definiert.

12. Kantenleiste (1) nach einem der vorangegangenen Ansprüche, wobei die Schmelzschicht (3) eine Dicke von 0,1 bis 1,5 mm, vorzugsweise 0,2 bis 0,5 mm aufweist.

13. Möbelstück (4) mit einer Kantenleiste (1) nach einem der vorangegangenen Ansprüche, wobei die Schmelzschicht (3) zumindest abschnittsweise mit einer Kante (40) des Möbelstücks (4) stoffschlüssig verbunden ist.

14. Möbelstück (4) nach Anspruch 13, wobei die Unterseite (30) der Kantenleiste (1) vollflächig mit der Kante (40) des Möbelstücks (4) stoffschlüssig verbunden ist.

## Claims

1. Edge strip (1) for pieces of furniture, comprising a melting layer (3) and a structural layer (2) connected to the melting layer (3), **characterized in that** the melting layer (3) contains both polar and non-polar components in the molecular structure, and **in that** the melting layer (3) contains energy-absorbing additives.

2. Edge strip (1) according to Claim 1, the structural layer (2) being produced from a thermoplastic polymer, preferably polypropylene, acrylonitrile-butadiene-styrene copolymer, polyvinyl chloride, polymethyl methacrylate, polyethylene terephthalate.

3. Edge strip (1) according to one of the preceding claims, the melting layer (3) being based on a thermoplastic polymer, preferably polypropylene, acrylonitrile-butadiene-styrene copolymer, polyvinyl chloride, polymethyl methacrylate, polyethylene terephthalate.

4. Edge strip (1) according to one of the preceding claims, the melting layer (3) being based on the material from which the structural layer (2) is produced.

5. Edge strip (1) according to one of the preceding claims, the structural layer (2) and the melting layer (3) being connected in a material-bonded manner.

6. Edge strip (1) according to one of the preceding claims, the structural layer (2) and the melting layer (3) being co-extruded.

7. Edge strip (1) according to one of the preceding claims, the material of the melting layer (3) having a lower melting point than the material of the structural layer (2).

8. Edge strip (1) according to one of the preceding claims, the material of the melting layer (3) being a copolymer, preferably a graft copolymer, preferably maleic acid anhydride-grafted polypropylene.

9. Edge strip (1) according to one of the preceding claims, the melting layer (3) containing light- and/or radiation-absorbing additives, preferably laser pigments.

10. Edge strip (1) according to one of the preceding claims, the structural layer (2) forming the upper layer of the edge strip (1), which defines an upper side or visible side (20) of the edge strip (1).

11. Edge strip (1) according to one of the preceding claims, the melting layer (3) forming the lower layer of the edge strip (1), which defines an underside or abutting side (30) of the edge strip (1).

12. Edge strip (1) according to one of the preceding claims, the melting layer (3) having a thickness of 0.1 to 1.5 mm, preferably 0.2 to 0.5 mm.

13. Piece of furniture (4) with an edge strip (1) according to one of the preceding claims, at least portions of the melting layer (3) being connected in a material-bonded manner to an edge (40) of the piece of furniture (4).

14. Piece of furniture (4) according to Claim 13, the full surface area of the underside (30) of the edge strip (1) being connected in a material-bonded manner to the edge (40) of the piece of furniture (4).

## Revendications

1. Baguette d'angle (1) pour meubles, comprenant une couche fusible (3) et une couche structurelle (2) connectée à la couche fusible (3), **caractérisée en ce que** la couche fusible (3) contient à la fois des proportions polaires et non polaires dans sa structure moléculaire, et **en ce que** la couche fusible (3) contient des additifs absorbant l'énergie.

2. Baguette d'angle (1) selon la revendication 1, dans laquelle la couche structurelle (2) se compose d'un polymère thermoplastique, de préférence de polypropylène, d'un copolymère acrylonitrile-butadiène-styrène, de polychlorure de vinyle, de polyméthylméthacrylate, ou de polyéthylène téréphtalate.

3. Baguette d'angle (1) selon l'une quelconque des revendications précédentes, dans laquelle la couche fusible (3) est à base d'un polymère thermoplastique, de préférence de polypropylène, d'un copolymère acrylonitrile-butadiène-styrène, de polychlorure de vinyle, de polyméthylméthacrylate, ou de polyéthylène téréphtalate.

4. Baguette d'angle (1) selon l'une quelconque des revendications précédentes, dans laquelle la couche fusible (3) est à base du matériau à partir duquel est fabriquée la couche structurelle (2).

5. Baguette d'angle (1) selon l'une quelconque des revendications précédentes, dans laquelle la couche structurelle (2) et la couche fusible (3) sont connectées l'une à l'autre par liaison de matière.

6. Baguette d'angle (1) selon l'une quelconque des revendications précédentes, dans laquelle la couche structurelle (2) et la couche fusible (3) sont co-extrudées.

7. Baguette d'angle (1) selon l'une quelconque des revendications précédentes, dans laquelle le matériau de la couche fusible (3) présente un point de fusion plus bas que le matériau de la couche structurelle (2).

8. Baguette d'angle (1) selon l'une quelconque des revendications précédentes, dans laquelle le matériau de la couche fusible (3) est un copolymère, de préférence un copolymère greffé, de préférence du polypropylène greffé anhydride maléique.

9. Baguette d'angle (1) selon l'une quelconque des revendications précédentes, dans laquelle la couche fusible (3) contient des additifs absorbant la lumière et/ou les rayonnements, de préférence des pigments laser.

10. Baguette d'angle (1) selon l'une quelconque des revendications précédentes, dans laquelle la couche structurelle (2) forme la couche supérieure de la baguette d'angle (1), qui définit un côté supérieur ou un côté visible (20) de la baguette d'angle (1).

11. Baguette d'angle (1) selon l'une quelconque des revendications précédentes, dans laquelle la couche fusible (3) forme la couche inférieure de la baguette d'angle (1), qui définit un côté inférieur ou un côté d'appui (30) de la baguette d'angle (1).

12. Baguette d'angle (1) selon l'une quelconque des revendications précédentes, dans laquelle la couche fusible (3) présente une épaisseur de 0,1 à 1,5 mm, de préférence de 0,2 à 0,5 mm.

13. Meuble (4) comprenant une baguette d'angle (1) selon l'une quelconque des revendications précédentes, dans lequel la couche fusible (3) est connectée au moins en partie par liaison de matière à un angle (40) du meuble (4).

14. Meuble (4) selon la revendication 13, dans lequel le côté inférieur (30) de la baguette d'angle (1) est connecté par liaison de matière sur toute la surface à l'angle (40) du meuble (4).
